# EUROPEAN PATENT SPECIFICATION

(11) **EP 2 319 269 B1**
(45) Date of publication and mention of the grant of the patent: **07.05.2014**
(21) Application number: 08803285.9
(22) Date of filing: 27.08.2008
(51) Int. Cl.: H04W 40/10, H04L 29/08, H04W 40/24, H04W 52/00

(54) **ROUTING MECHANISM FOR DISTRIBUTED HASH TABLE BASED OVERLAY NETWORKS**
ROUTINGMECHANISMUS FÜR AUF VERTEILTEN HASH-TABELLEN BASIERTE OVERLAYNETZE
MÉCANISME DE ROUTAGE DESTINÉ À DES RÉSEAUX DISTRIBUÉS SUPERPOSÉS BASÉS SUR UNE TABLE DE HACHAGE

(43) Date of publication of application: 11.05.2011
(73) Proprietor: Telefonaktiebolaget L M Ericsson (publ), 164 83 Stockholm (SE)
(72) Inventor: MÄENPÄÄ, Jouni, FI-03100 Nummela (FI); ERKE, Tuomas, FI-02760 Espoo (FI)
(74) Representative: Lind, Robert
(86) International application number: PCT/EP2008/061259
(87) International publication number: WO 2010/022774

(56) References cited:
- EP-A1- 1 835 668
- US-A1- 2002 090 949
- US-A1- 2007 057 767
- LEUNG A K ET AL: "On Topology Control of Wireless Peer-to-Peer File Sharing Networks: Energy Efficiency, Fairness and Incentive" WORLD OF WIRELESS MOBILE AND MULTIMEDIA NETWORKS, 2005. WOWMOM 2005. S IXTH IEEE INTERNATIONAL SYMPOSIUM ON A TAORMINA-GIARDINI NAXOS, ITALY 13-16 JUNE 2005, PISCATAWAY, NJ, USA,IEEE, 13 June 2005 (2005-06-13), pages 318-323, XP010811097 ISBN: 978-0-7695-2342-2
- "Universal Mobile Telecommunications System (UMTS); Radio Resource Control (RRC) protocol specification (3GPP TS 25.331 version 5.10.0 Release 5); ETSI TS 125 331" ETSI STANDARDS, LIS, SOPHIA ANTIPOLIS CEDEX, FRANCE, vol. 3-R2, no. V5.10.0, 1 September 2004 (2004-09-01), XP014016832 ISSN: 0000-0001 cited in the application
- CHEN B ET AL: "SPAN: AN ENERGY-EFFICIENT COORDINATION ALGORITHM FOR TOPOLOGY MAINTENANCE IN AD HOC WIRELESS NETWORKS" WIRELESS NETWORKS, ACM, NEW YORK, NY, US, vol. 8, no. 5, 1 September 2002 (2002-09-01), pages 481-494, XP001131429 ISSN: 1022-0038

## Description

### Technical Field

The present invention relates to a routing mechanism for a distributed hash table based overlay network. The invention is applicable in particular to an optimised procedure for determining the routing of resource requests in peer-to-peer networks.

### Background

Peer-to-peer or P2P networks make use of the pooled resources of participating nodes including processing capabilities and communication bandwidth to facilitate a wide variety of services including file sharing and Voice-over-Internet Protocol (VoIP) telephony. In the absence of central servers, particular P2P services may make use of "overlay networks" to optimise resource location. An overlay network comprises nodes connected by virtual links representing paths extending across possibly many physical links in the underlying network (e.g. the Internet). Each node in the overlay network maintains a routing table containing a set of links to certain other nodes within the overlay network. Resource requests are passed between nodes until they arrive at a node which is responsible for that resource.

A hash table is a data structure that associates keys with values. A key can be, for instance, a person's name and the associated value that person's contact address (e.g. email address or Session Initiation Protocol (SIP) Uniform Resource Identifier (URI)). The primary operation a hash table supports is lookup - i.e. given a key, the hash table finds the corresponding value. *Distributed* Hash Tables (DHTs) provide a lookup service similar to a hash table. However, unlike regular hash tables, DHTs are decentralized hash tables that are used in distributed systems or networks. In a DHT, the responsibility for maintaining mappings from names to values is distributed among the nodes participating in the system. This is achieved by partitioning the key space among the participating nodes.

DHTs provide an efficient means for mapping resource names ("keys") to locations within an overlay network. DHTs make use of a hashing algorithm to map keys, e.g. song titles, SIP URIs, etc, to a finite value space, e.g. 128 bits. The hashing algorithm is chosen to ensure a relatively uniform spread of hash values across the value space. Thus, for example, the hashing of 100 song titles will likely result in 100 hash values that are relatively evenly spaced across the value space. Nodes within an overlay network are identified by usernames, which are themselves hashed into respective hash values. Each node then becomes responsible for a set of hash values within the value space which neighbour its own value. In practice, a node will store resource locations (e.g. IP addresses) from which resources matching the resource names that it "owns", can be obtained. When a node in the overlay network receives a request for a resource, the node determines whether or not it owns the corresponding hash value. If so, it returns the location of the resource to the requester (via the overlay network). If it does not own the hash value, it inspects its routing table to identify that node within the table which has a hash value closest to the hash value of the request, and forwards the request to that node. The receiving node repeats the procedure, and so on until the request arrives at the node which does own the hash value corresponding to the request and which therefore knows the resource location.

In some DHTs such as Chord [I. Stoica, R. Morris, D. Karger, M. F. Kaashoek and H. Balakrishnan: "Chord: A Scalable Peer-to-peer Lookup Service for Internet Applications" - Proceedings of the ACM SIGCOMM'01 Conference, August 2001, San Diego, California, USA.], the entries in the routing table are called finger pointers. In addition to the routing table, each node also maintains another data structure called the neighbour list. The neighbour list contains pointers to the immediate successors and predecessors (i.e. neighbours) of the node in the overlay network. A node picks its neighbours according to the network's topology.

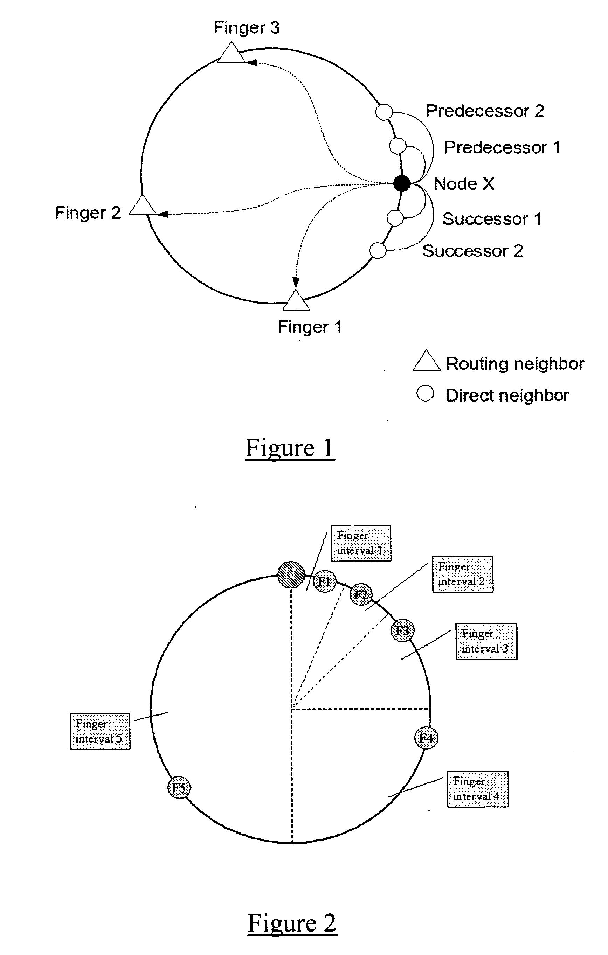

The difference between neighbours (which can be either predecessors or successors) and fingers is illustrated in Figure 1, which shows an overlay network having a ring topology (only a small number of the nodes within the ring are illustrated). Each node maintains a routing table containing the locations and hash values of a small number of succeeding and preceding nodes in the ring, as well as for a small number of more distant nodes. In the illustrated network, a Node X maintains the locations of two successor nodes, two predecessor nodes and three remote nodes in its routing table. For instance, in the Chord DHT algorithm referred to above, each node *n* maintains a routing table with up to *m* fingers (*m* is chosen so that it is equal to the number of bits in node identifiers). The ith entry in the table at node n contains the identity of the first node *s* that succeeds *n* by at least 2^{*i*-1} on the identifier ring.

Figure 2 shows an example of a Chord ring where *m*=5, meaning that each node maintains 5 fingers. Node *N* divides the identifier ring into five different finger intervals, the ranges of which are listed in Table 1. For instance, the finger for the interval 3, *F3,* is the first node that succeeds *N* by at least 2³⁻¹ = 4 on the identifier ring.

**Table 1 - Ranges of finger intervals for node N**

| **Finger interval** | **Start** | **End** |
|---|---|---|
| 1 | N+1 | N+2 |
| 2 | N+2 | N+4 |
| 3 | N+4 | N+8 |
| 4 | N+8 | N+16 |
| 5 | N+16 | N+32 |

The Chord DHT algorithm can also be extended so that it maintains multiple alternative finger pointers for each finger interval. One way to achieve this is to ask the primary finger peer to return a list of its successor nodes on the Chord ring, and then maintain pointers to these nodes in addition to the primary finger pointer.

Whilst a larger number of entries within the routing tables can make the network more efficient in terms of routing and more robust against node withdrawal, large tables are difficult to maintain and therefore increase the unreliability of the network. A node within the overlay network ensures that the information in its routing table is up to date by attempting to contact its neighbours periodically.

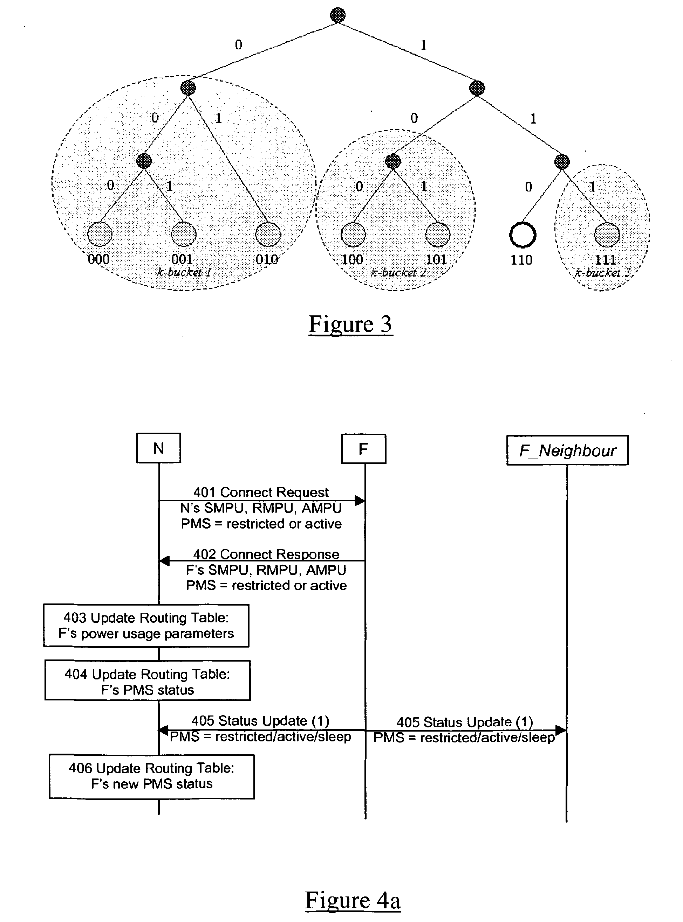

Examples of other DHT topologies include tree topologies. For instance, the Kademlia DHT [P. Maymounkov and D. Mazieres: "Kademlia: A peer-to-peer information system based on the xor metric", Proceedings of IPTPS02, Cambridge, USA, March 2002] organizes nodes in a binary tree-like structure. For example, if 160-bit node identifiers are used, then, in Kademlia, for every value of *i*, where *0* ≤ *i* < *160*, each node keeps a list of triples of *<IP address, port, Nocie-ID>* for nodes of distance between 2*ⁱ* and 2^{*i*+1} from itself. These lists are called *k*-buckets, and each *k*-bucket can contain up to *k* entries. The Kademlia routing table is a binary tree whose leaves are *k*-buckets. Figure 3 shows a very simple example of a network where a node 110 maintains three *k-*buckets shown as three circles 1, 2 and 3. *k*-bucket 3 contains nodes whose distance to node 001 is 1, *k*-bucket 2 nodes with distance 2 or 3, and *k*-bucket 1 nodes whose distance is between 4 and 7.

Lookups in Kademlia work in an iterative manner: first, the lookup initiator picks α nodes, these being nodes a distance α from its closest non-empty *k*-bucket (a typical value for α is 3). Next, the initiator sends parallel lookup requests to the α nodes it has chosen. Each recipient of a lookup request returns triples for the *k* nodes it knows about closest to the target ID. These triples can come from a single *k*-bucket or they may come from multiple *k*-buckets if the closest *k*-bucket is not full. However, if a recipient of a lookup request holds the resource being searched for, it simply returns that resource in the response it generates to the lookup request. The lookup procedure also has a recursive step (not to be confused with recursive routing described below) in which the initiator resends the lookup request to nodes it has learned about from previous lookup responses. The lookup process ceases when the initiator receives the desired resource.

As broadband wireless technologies such as Wideband Code Division Multiple Access (WCDMA) and High Speed Packet Access (HSPA) become more widespread, it is expected that there will be a growth in the use by mobile terminals of Peer-to-Peer (P2P) applications such as Peer-to-Peer Session Initiation Protocol (P2PSIP) and file sharing. This poses a problem for mobile terminals that typically have a limited battery capacity, since a mobile terminal acting as a peer in a DHT-based P2P overlay network needs to relay traffic of other users and to send and receive frequent DHT maintenance messages. In both second generation (2G) and third generation (3G) mobile networks it has been found that frequent messages sent on persistent connections consume significant amounts of energy. Most mobile terminals have a sleep mode, which is used to save running down the terminal battery when the device is switched on, but not actively transmitting or receiving messages. DHTs require frequent transmission of data over the radio interface and can thus drain the mobile terminal's battery quickly, because each message forces the terminal to frequently change (i.e. wake up) from sleep mode to active mode.

US 2002/0090949 discloses a peer-to-peer radio access system, in which the status of the battery of each terminal that may form part of the routing path of a call is reported to other terminals, so that the routing path can be decided based on the statues of the battery-charge of each terminal along the routing path.

The present invention has been conceived with the foregoing in mind.

### Summary

The present invention proposes a mechanism that allows peers in an overlay network to exchange information about their power consumption. It also allows a peer to inform its connected peers whenever it is about to switch from sleep mode to active mode and vice versa. This information can then be used to optimize the routing performance of the routing algorithm in terms of power consumption.

According to a first aspect of the present invention there is provided a node for use within an overlay network as defined in claim 1. The node comprises a decision unit for making a routing decision based upon a knowledge of the power consumption levels and/or power availability of a set of peer nodes in the overlay network.

By way of example, the node may be a mobile user terminal.

In the case where said set of peer nodes are routing neighbour nodes, the node may comprise a memory for storing a routing table containing, for each routing neighbour node, a mapping between an overlay network address of the node and a physical locator of the node, and parameters in, or associated with, the routing table for each routing neighbour. The parameters include:
1) power usage parameters indicating a level of power consumption for each of a plurality of operational states, and
2) a power management status, PMS, parameter indicating a current, or most recently notified, operational state of the routing neighbour; and
3) a processing unit configured to determine a routing neighbour to forward a message to, based on the power usage parameters and the PMS parameters of the routing neighbours.

The node may be configured to receive a status update message from a routing neighbour indicating that the routing neighbour is about to change its operating state, the status update message including the routing neighbour's new PMS parameter for the operating state it is about to enter. The receiving node stores the new PMS parameter in the routing table entry for the routing neighbour.

The node may be configured to determine from the parameters of the routing neighbours in the routing table, if any of the routing neighbours are in a sleep mode, in which case it stores the status update message in the overlay network for later delivery to the sleeping routing neighbour when it changes state out of the sleep mode to an active or restricted mode.

In another aspect there is provided a node as defined in claim 4, wherein the node is configured to provide power consumption levels for each of a plurality of operational states of the node to other nodes in the overlay network, and to notify one or more peer nodes in the network of an impending change in operational state of the node. Again, the node may be a mobile user terminal.

The node may comprise a memory storing power usage parameters indicative of said power consumption levels, and a processing unit configured to provide said power usage parameters in peer protocol messages sent to other nodes in the overlay network, and to provide a PMS parameter indicating an operational state that the node is about to enter in a notification sent to other nodes of the network. The nodc may be further configured to send a status update message to one or more of routing neighbours within said overlay network indicating that it is about to change its operating state, the status update message including the node's PMS parameter for the operating state it is about to enter.

The node may be configured to provide information relating to its remaining battery capacity to other nodes of the network, wherein the remaining battery capacity comprises an indication that if the node remains in an active state it will run out of battery capacity within a certain amount of time. The node may also he configured to indicate that its power supply is unlimited, e.g. is connected to a mains supply.

In the case of a mobile terminal, the node according to either aspect may be configured to access a Radio Resource Control, RRC, state machine to determine operating state information. For example, the node may comprise an application running on a native platform of the node for accessing the RRC state machine. The node may comprise a vendor-specific application programming interface (API) configured to access the RRC state machine, or a Java application obtained by way of a Java Specification Request (JSR), the Java application enabling access to the RRC state machine.

The node may be configured to obtain power usage parameters of a node by reference to a terminal model of the node, and from a web server, or from data provided with a P2P application residing at the node. The node may determine the model of the terminal by reference to a system property.

In the case where a node is unable to determine the operating state of another peer, the node may configured to set a PMS parameter to 'unknown' in peer protocol messages that it originates.

By way of example, the power consumption levels may he specified in terms of power usage parameters that include one or more of:
a Sleep Mode Power Usage, SMPU, parameter specifying the power consumption of the node when it is in a power saving, or sleep, mode;
an Active Mode Power Usage, AMPU, parameter specifying the power consumption of the node when it is operating in an active mode; and
a Restricted Mode Power Usage, RMPU, parameter specifying power consumption when the node is operating in a restricted mode,

A PMS parameter may indicate an operational state selected from: a power saving, or sleeping, state; an active state; a restricted state; and an unknown state.

According to another aspect of the present invention there is provided a method of making a routing decision at a routing node of an overlay network as defined in claim 14. The method comprises selecting one or more of a set of peer nodes in the overlay network to forward a message to based upon a knowledge of the power consumption levels and/or power availability of the peer nodes.

The overlay network may employ a distributed hash table, DHT, and wherein the overlay network comprises nodes that maintain routing tables. A routing table contains, for each of a set of routing neighbour nodes in the overlay network, a mapping between an overlay network address of the node and a physical locator of the node. The method further comprises at each of said overlay network nodes:
maintaining parameters in, or associated with, the routing table for each routing neighbour, the parameters including:
   power usage parameters indicating a level of power consumption for each of a plurality of operational states, and
   a power management status, PMS, parameter indicating a current, or most recently notified, operational state of the routing neighbour.

The step of maintaining parameters may comprise receiving a status update message from a routing neighbour, the status update message including a PMS parameter specifying the next operational state that the routing neighbour is going to enter, and updating the routing ncighbour's PMS parameter in, or associated with, its routing table.

The method may comprise checking the PMS status of the routing neighbours and either sending the status update message to a routing neighbour if it is not sleeping, or if it is sleeping storing the message in the overlay network for later delivery to the routing neighbour. The step of storing the status update message in the overlay network comprises checking the PMS status of direct routing neighbours of the sleeping routing neighbour to identify a non-sleeping direct routing neighbour, and sending the status update message destined for the sleeping routing neighbour to the non-sleeping direct neighbour for storage. When the non-sleeping direct routing neighbour is about to enter the sleep mode, the method further comprises forwarding the status update message to another non-sleeping direct routing neighbour of the sleeping routing neighbour.

The method may be advantageously employed in a Peer-to-Peer, P2P, network, information relating to the power consumption levels and/or power availability being provided in messages sent between nodes using a peer protocol such as P2PSIP.

The step of selecting a routing neighbour to forward a message to may comprise:
determining a set of alternative routing neighbours as next hop peer nodes for a message that is to be routed to a destination peer;
checking the operating state of the next hop peer nodes; and either
forwarding the message to a next hop peer node if no change of state will be required when the message is sent to that node; or
checking the power consumption levels of the next hop peer nodes if there are no nodes that will not require a change of state, calculating the increase in power consumption involved in changing state of each of the next hop peers, and forwarding the message to the next hop peer requiring the smallest increase in power consumption.

In the case of a DHT based overlay network, the DHT operates using a Chord algorithm, or a Kademlia algorithm. Alternatively, the DHT based overlay network may route messages in a recursive fashion or in an iterative fashion.

In at least certain embodiments of the invention, the routing neighbours are super peers in a hierarchical overlay network.

The operating states of routing neighbours may be specified in terms of PMS parameters that include one or more 'unknown' status parameters, in which case the method comprises the steps of:
A) if the set of alternative next hop nodes contains at least one peer in an active mode forwarding the message to one of the peers in active mode; and
B) if the set of alternative next hop nodes contains no peers in the active mode, selecting a peer from among the peers with unknown status having the lowest power consumption in the active mode.

It is an advantage of at least certain embodiments that operation of the economic path finder mechanism described herein enables significant reductions in the levels of power consumption associated with using P2P applications in mobile terminals. This is achieved by allowing peers to exchange information related to their power consumption levels in different operating states, and information about their current operating states (power management status - e.g. sleep mode or active mode). Since a peer is informed of the power consumption and power management status of its routing neighbours, it can optimize routing decisions based on this information. This allows the network to save energy by routing messages to neighbours at a low cost (i.e. increase in power consumption) and extends the lifetime of battery-powered terminals. The mechanism is also applicable to other types of peers and can be usefully employed by all types of peers that operate at different power consumption levels and have a need to conserve energy. The mechanism can also be extended to take into account the remaining battery capacity of wireless nodes when making routing decisions.

It is also advantageous that the economic path finder mechanism can be applied to overlay networks employing any DHT algorithm, and that the mechanism is applicable to both iterative and recursive routing modes. The mechanism can also be used to select low cost (in terms of power consumption) super peers.

### Brief Description of the Drawings

Figure 1 illustrates schematically a DHT-based ring overlay network comprising a number of nodes;
Figure 2 further illustrates a DHT-based ring overlay network, showing neighbourhood relations between nodes;
Figure 3 illustrates a simple example of a Kademlia DHT-based tree overlay network.
Figures 4a and 4b illustrate signal flows in operation of a routing mechanism in accordance with embodiments of the invention;
Figure 5 is a flow diagram of a method in accordance with embodiments of the invention; and
Figure 6 illustrates schematically a routing node of an overlay network.

### Detailed Description

An economic path finder mechanism embodiment is described below and which uses four new parameters carried in peer protocol messages. Peer protocol is the protocol that nodes participating in a P2P overlay network use to exchange information with each other. These four new parameters are called Sleep Mode Power Usage (SMPU), Restricted Mode Power Usage (RMPU), Active Mode Power Usage (AMPU) and Power Management State (PMS). In addition to peer protocol messages, the same parameters are also stored in the routing tables maintained by each of the peers in the overlay network.

The Sleep Mode Power Usage (SMPU) parameter specifies the power consumption (e.g. in milliwatts) of a peer device when it is in its power saving (i.e. sleep) mode. The Active Mode Power Usage (AMPU) specifies the power consumption (e.g. in milliwatts) of the device when it is operating in active mode, for instance when a mobile terminal has been allocated dedicated uplink and downlink radio channels. The Restricted Mode Power Usage (RMPU) parameter specifies power consumption when the device is operating in a restricted mode (e.g. when a mobile terminal does not have dedicated uplink and downlink channels allocated, but uses a default common or shared transport channel for both uplink and downlink transmissions). The Power Management Status (PMS) parameter, which is used in status update messages, specifies the next power management state that the sender is about to enter. The parameter can have one of four values: 'sleep', 'restricted', 'active' and 'unknown'.

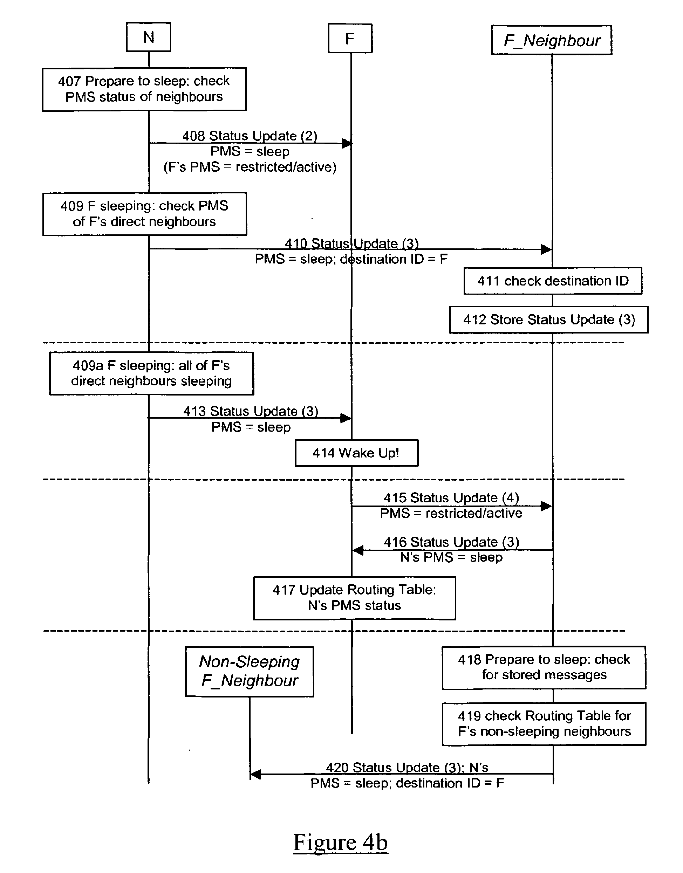

Figures 4a and 4b illustrate the signal flow sequences between peers. In this illustrated example, the PMS parameters of the peers are always 'sleep', 'restricted' or 'active'. Situations in which the 'unknown' parameter is used are described later. Peer N is a typical node in an overlay network (see, for example Figure 2). Peer F is a routing neighbour, or finger of peer N, and peer *F_neighbour* is a direct neighbour of peer F. If peer N wishes to establish a connection with peer F, peer N includes the SMPU, RMPU and AMPU parameters into an initial request, henceforth referred to as the Connect request. This is illustrated in Figure 4a at step 401. When generating a response to the Connect request (step 402), finger F will include its own SMPU, RMPU and AMPU values in the response. If either peer, N or F, does not support the power saving mode, it either does not include the SMPU and RMPU parameters in the message or it sets all the power usage parameters to have the same value such that SMPU = RMPU = AMPU. In addition, these power usage parameters are included in a response to a status update message which will be described in more detail below.

The Connect request constructed and sent by peer N (step 401) includes the PMS parameter as well as the power usage parameters SMPU, RMPU and AMPU. The value of the PMS parameter is set either to 'restricted' or 'active' depending on which state peer N is in (the value cannot be 'sleep' since peer N is transmitting data). Likewise, peer F includes its current power management state PMS parameter in the Connect response to peer N (step 402) together with its three power usage parameters (SMPU, RMPU and AMPU). Upon receiving the Connect response, at step 403 peer N stores the values of the three power usage parameters into the routing table entry it maintains for peer F. In addition, at step 404 peer N sets the value of the PMS parameter to the value returned by peer F.

If peer F changes its power management state, then, as shown at step 405, it informs each peer with which it is maintaining a connection (which includes peers N and *F_neighbour*) by sending a status update message, Status Update (1). Status Update (1) contains the PMS parameter, the value of which has been set to 'active', 'restricted' or 'sleep', depending on which state the sender, peer F, is about to enter. At step 406, when peer N receives the Status Update (1) message, it updates the routing table entry it maintains for peer F with the new value of the PMS parameter received from peer F.

A peer should avoid sending status update messages to routing neighbours that are sleeping, since this would force the peers to wake up and thus increase their energy consumption. However, sleeping peers should still receive the status update messages as soon as they wake up, so that they will have up-to-date information about the status of the peers with which they are maintaining connections. This is achieved by making nodes in the overlay network responsible for storing status update messages while their destination peers are sleeping, and delivering the status update messages to the peers when they wake up.

As shown in Figure 4b, at step 407 peer N is about to switch to the sleeping mode, and thus needs to send a status update message to its routing neighbours, including peer F. Peer N first checks its routing table to check the PMS status of peer F (peer N maintains this information in the routing table entry it has for peer F, as described above). If peer F is not sleeping, peer N can simply send the message Status Update (2) to peer F as at step 408. However, if peer F is sleeping, then at steps 409-412 peer N stores the status update message in the overlay network. Note that it is not sufficient for peer N to store the message itself because it is about to enter the sleep mode. When in the sleep mode, it will not know when peer F wakes up, and will not be able to deliver the message while it is sleeping.

As was described above, multiple alternative finger pointers can be maintained for a single finger interval by asking the primary finger peer to return a list of its successors, and by maintaining a connection with all or a subset of these successors. Thus, peer F is the primary finger of peer N, which also maintains a connection with the direct neighbours of peer F, including *F_neighbour.* Therefore at step 409 peer N selects one successor of peer F that either does not support sleep mode (i.e. is always active) or is currently awake. If peer F has successors that are always active, then peer N chooses from the set of those successors the one that is closest to peer F. If peer F has only successors that support sleep mode and some of them are awake, peer N chooses from the set of active successors the one that is closest to peer F. In either case, peer N next sends to the selected successor, *F_neighbour*, a Status Update (3) message at step 410, with a destination Peer-ID of the message set to that of peer F.

On receiving the Status Update (3) message, at step 411 peer *F_neighbour* checks the destination Peer-ID of the message and determines that the intended recipient is peer F. Since peer F is one of peer *F_neighbour*'s direct neighbours, and it knows that peer F is sleeping, at step 412 peer *F_neighbour* stores the Status Update (3) message to be delivered to peer F as soon as peer F wakes up. However, if at step 409 peer N determined that none of the direct neighbours of peer F is awake (as shown at step 409a), then at step 413 peer N is forced to send the Status Update (3) message directly to peer F, so that peer F wakes up at step 414.

Assuming that the Status Update message is stored at a neighbour of F, then, if another successor of peer F that is closer to peer F becomes active, peer F_*neighbour* should transfer the Status Update messages that it is storing to the closer successor.

Peer F may wake up for a variety of reasons - i.e. not necessarily because peer F receives a Status Update message, as at step 414, but for any reason such as because peer F's user wants to start a call. When peer F wakes up, it first needs to obtain any Status Update messages that the overlay network has been storing while peer F has been sleeping. This allows peer F to learn the current status of its neighbours. If peer F has successors that are always active, then peer F can get the stored Status Update messages from the closest always-active successor. However, if peer F does not have any successors that are always active, it cannot know which one of the successors is storing the Status Update messages that were sent to peer F while it was sleeping. In addition, peer F does not know the current status of its successors. Therefore, peer F has to contact its successors one by one to learn which one of the successors is storing the Status Updates. Since the Status Update messages are always stored by the closest active successor, peer F starts by contacting its closest successor. Peer F can stop contacting further successors as soon as it finds the successor that is holding the stored Status Update messages.

Each peer P that is about to enter sleep mode should also store an empty Status Update message addressed to itself in one of its successors. If peer P has successors that do not support sleep mode (i.e. are always active), the empty Status Update should be stored in the closest such successor. If all of the successors of peer P support sleep mode, then peer P should select from the set of active successors the one that is closest to peer P. If all of the successors are sleeping, peer P should not store an empty Status Update request, because doing so would force it to wake up one successor. The benefit of storing the empty Status Update request is that when peer P wakes up, it is possible that no other node has stored any Status Update messages destined to peer P while peer P was sleeping. When waking up, peer P needs to find out which successor is storing the Status Updates. If there are no stored Status Update messages, peer P needs to contact each of its successors to be sure that none of the successors has any stored messages for it. However, if peer P stored the empty Status Update request before entering sleep mode, peer P can stop the checks as soon as it finds a successor holding the empty Status Update request.

Once peer F has obtained any stored Status Update messages, it learns the current status of its direct neighbours (i.e. successors and predecessors) and its routing neighbours (i.e. fingers). Note that peer F can delay contacting its fingers and predecessors until it has obtained the stored Status Update requests from one of the successors. This way peer F always avoids the cost of waking up those of its predecessors and fingers that are sleeping; after having obtained the stored Status Update messages, peer F knows the current status of its predecessors, fingers and those successors it did not contact while searching for the stored messages.

As shown in Figure 4b at step 415, when peer F wakes up it changes from sleep to restricted or active status and sends a Status Update (4) message to one of its successors, *F_neighbour,* to obtain the Status Update messages that the successor is storing for peer F. This Status Update (4) message is received by peer *F_neighbour.* Then at step 416, peer *F_neighbour* sends to peer F the original Status Update (3) message received from peer N. At step 417 peer F updates its routing table entry for peer N with the information in the Status Update message (3).

As shown at step 418 in Figure 4b, where peer *F_neighbour* has to enter sleep mode before it has been able to deliver the Status Update (3) message to peer F, then at step 419 it determines from its own routing table another neighbour of peer F that is not sleeping (*Non-sleeping F_Neighbour*), and at step 420 forwards the Status Update message to *Non-sleeping F_Neighbour.*

Also, it is possible that at step 419 peer *F_neighbour,* storing the Status Update (3) message destined for peer F, determines that all the other neighbours of peer F are sleeping when it is about to enter sleep mode. In that case, it is forced to send the Status Update (3) message to peer F, thereby waking up peer F.

Note that the above mechanism achieves the best performance when the overlay network has, in addition to peers that support sleep mode, also peers that are always active (i.e. do not support sleep mode). Having peers that are always active is a realistic assumption in P2P networks that have both fixed and mobile peers, since many fixed peers (e.g. personal computers with fixed Internet access) are always active. If however the overlay network has only peers that support sleep mode, the approach described here seeks to minimize the number of successors that must be woken from sleep mode by a given peer in order to find out the current status of the nodes with which that given peer maintains connections.

By way of an example, the SMPU, RMPU and AMPU parameters can be mapped to different states of the WCDMA Radio Resource Control (RRC) state machine [3GPP TS 25.331, Yeh 2004]. This RRC state machine has two states in which the terminal is in sleep mode, and in which no data transmission is possible: these are the CELL_PCH and URA_PCH states. In this case, the SMPU parameter specifies the maximum power consumption in these states. The RRC state machine also has a CELL_FACH state, in which the terminal does not have a dedicated channel allocated to it, but is assigned a default, common or shared transport channel for both uplink and downlink transmissions. This shared transport channel is suitable for bursty traffic such as web browsing, and consumes less energy than a dedicated channel. In this case, the RMPU parameter is used to specify the power consumption in the CELL_FACH state. Finally, the RRC state machine has a CELL_DCH state, in which the terminal has dedicated channels allocated in both the uplink and downlink directions. The CELL_DCH state is suitable for traffic such as voice, streaming video and File Transfer Protocol (FTP) traffic. The energy consumption is higher than in the other states and so the AMPU parameter is used to specify the power consumption in the CELL_DCH state.

It should be noted that WCDMA is used only as an example here. The path finder mechanism of this embodiment is applicable to other wireless technologies as well as to non-wireless nodes that have different power consumption levels.

The Power Management Status (PMS) parameter is used in status update messages (as described above) to specify the next power management state that the sending node is about to enter. Peer protocols (such as the P2PSIP) typically use binary encoding. The PMS parameter can be included as a binary value in peer protocol messages, as indicated in Table 2.

**Table 2 - PMS parameter values**

| **PMS parameter value** | **Bynary code in peer protocol message** |
|---|---|
| Sleep | 00 |
| Restricted | 01 |
| Active | 10 |
| Unknown | 11 |

In addition, the three power usage parameters (SMPU, RMPU and AMPU) can be included as binary values. Assuming that a 12-bit value range, between 0 and 4095, is sufficient for each of the power usage parameters, a total of only 38 bits (36 for the power usage parameters, plus 2 for the PMS parameter) is required to be added to the peer protocol messages. Thus, sending the additional parameters represents a very small addition to the power consumption and cost of sending the message.

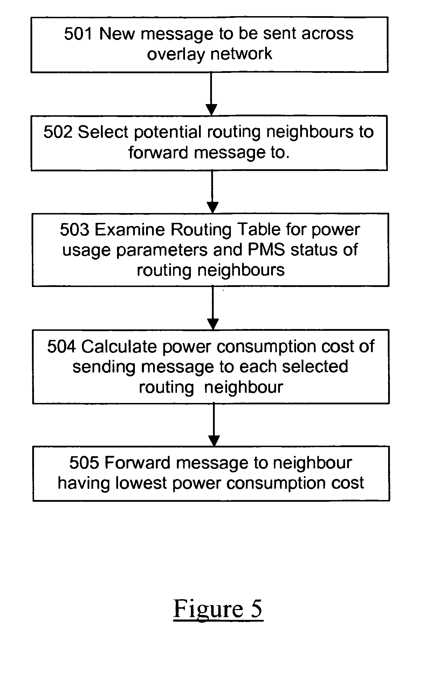

Knowledge of the power usage parameters and the PMS parameter of its peers enables a peer node N to make routing decisions to minimise the power consumption. An overview of the use of the economic pathfinder mechanism of the present invention by a node of an overlay network that employs a DHT is illustrated in the flow diagram of Figure 5. The node maintains a routing table containing, for each of its routing neighbours, a mapping between an overlay network address of the node and a physical locator of the node. The node also maintains the power usage parameters and PMS parameters of the routing neighbours in, or associated with, the routing table for each routing neighbour. At step 501 the node determines (or receives an instruction over the overlay network) that a message is to be sent to a destination over the overlay network. At step 502 the node determines (depending on the DHT algorithm in use) a set of potential routing neighbours to forward the message to. At step 503, the node examines its routing table and determines the power usage parameters and PMS parameter of each of the selected routing neighbours. At step 504 it calculates (as described above) the cost in terms of power consumption of sending the message to each of the routing neighbours. Finally, at step 505 it sends the message to the routing neighbour having the lowest power consumption cost.

This will be described in more detail in relation to two examples. Peer N first determines the set of alternative next hop peers for a message that is to be routed to a destination peer D. In our first example we will assume that the finger interval (i.e. routing table entry) that is closest to D's identifier contains the four peers F1, F2, F3 and F4 listed in Table 3. The PMS parameters show that peers F1, F2 and F3 are in sleep mode, whereas peer F4 is in the active state. In this case the optimal decision is to route the message to peer F4 as this involves no additional power consumption. Routing the message to F1, F2 and F3 should be avoided because these peers would need to wake up from the sleep mode (i.e. their power consumption would increase from SMPU to RMPU) in order to be able to receive new messages. The assumption is that a peer in sleep mode transitions first to the restricted mode when it wakes up. The peer may enter the active mode later if it needs higher bandwidth (for example). Therefore, the increase in power consumption in waking up a peer is always calculated by subtracting SMPU from RMPU.

**Table 3 - First example of alternative finger pointers for a finger interval**

| **Peer** | **PMS** | **SMPU** | **RMPU** | **AMPU** |
|---|---|---|---|---|
| F1 | sleep | 10 | 100 | 250 |
| F2 | sleep | 500 | 1000 | 2000 |
| F3 | sleep | 500 | 750 | 1500 |
| F4 | active | 10 | 125 | 800 |

A different situation arises if all the peers F1, F2, F3 and F4 are in sleep mode. In that case peer N needs to decide which one of the peers to wake up. To do this peer N calculates the increase in power consumption (RMPU - SMPU) involved in waking up each of the four peers and selects the peer with the smallest increase, which in this example is peer F1, with an increase in power consumption of 90mW.

Note that if all of the peers F1, F2, F3 and F4 are in active mode, all are operating at peak power consumption. In that case peer N can freely choose the next hop peer because there will be no increase in power consumption (or it could use a different method of selection, such as a load balancing mechanism).

Table 4 shows the power consumption and PMS parameters for a second example where peer F1 is in the sleep mode and peers F2, F3 and F4 are in the restricted mode. In this case, node N should avoid waking up peer F1, and choose from among peers F2, F3 and F4 as the preferred next hop peer for the current and future messages. This could mean that the selected peer will need to move from the restricted mode to the active mode (e.g. because it needs to increase its bandwidth to handle the increase in traffic). Peer N should therefore select the peer for which the increase in power consumption when moving from the restricted to the active mode is the smallest. The increases in power consumption for peers F2, F3 and F4 are 1000 mW, 750 mW and 675 mW, respectively. Thus, peer F4 should be selected.

**Table 4 - Second example of alternative finger pointers for a finger interval**

| **Peer** | **PMS** | **SMPU [mW]** | **RMPU [mW]** | **AMPU [mW]** |
|---|---|---|---|---|
| F1 | sleep | 10 | 100 | 250 |
| F2 | restricted | 500 | 1000 | 2000 |
| F3 | restricted | 500 | 750 | 1500 |
| F4 | restricted | 10 | 125 | 800 |

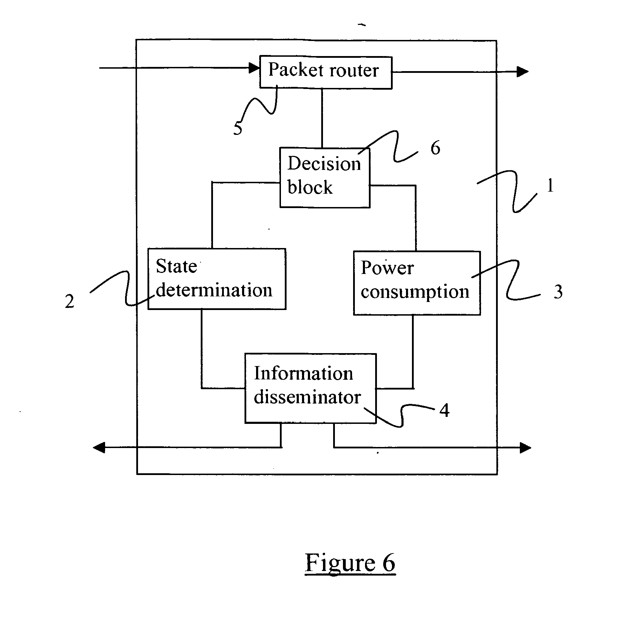

Figure 6 illustrates schematically a node 1 of an overlay network suitable for implementing the described method. The node comprises a state determination block 2 which is able to determine the operating state to which the node is about to switch, i.e. sleep, restricted, or active. A power consumption block 3 records the power consumptions in the various operating states. In the event that a state change is imminent, an information disseminator 4 is configured to provide the required status updates to peer nodes (neighbours and fingers). A packet router 5 receives packets sent via the overlay network and forwards them appropriately according to instructions provided by a decision block 6.

DHT based overlay networks can route messages in either an iterative or recursive fashion. The embodiments described above are based on an overlay network using recursive routing, in which a peer forwards the message to the next hop peer on the path towards the destination peer. In other words a peer X, when receiving a message destined for peer Y, forwards the message destined for Y to the next hop peer (or directly to peer Y if peer X is aware of the contact address of peer Y). In iterative routing, peers do not forward messages. Instead, peers only return contact addresses of other nodes. Thus, if peer X receives a look-up query from peer W with peer Y as a destination, peer X will return to peer W the contact address of peer Y (if peer X knows it), or the contact address of the next hop peer on the path towards peer Y. In iterative DHT algorithms (such as Kademlia) all routing decisions are made by the lookup initiator (i.e. the originating peer). Therefore, in embodiments of the invention that use iterative DHT algorithms, when a peer returns the information about the other potential next hop nodes (*k*-nodes in Kademlia) it includes the power usage parameters (SMPU, RMPU, AMPU) and PMS of the other nodes together with the routing table entries, so that the lookup initiator can perform the calculations needed to make the optimal routing decision. On the other hand, in recursive DHT algorithms the routing decision is made by the forwarding node, so there is no need to send the power usage parameters from node to node during lookups.

In an overlay network using iterative routing, the receiver of a lookup request replies with a lookup response to the lookup initiator. The lookup response includes the routing table entries of the nodes the responder knows about closest to the lookup target. Thus, when the economic path finder mechanism is being used, the responder can simply include the SMPU, RMPU, AMPU and PMS parameters into the lookup response. The lookup initiator can then use these parameters to calculate the optimal next hop node on the path towards the target node. For instance, in an overlay based on the Kademlia DHT algorithm, instead of returning <Node-ID, IP address, port> triples, the responder returns <Node-ID, IP address, port, SMPU, RMPU, AMPU, PMS> septuples of the k nodes it knows about closest to the target node.

In this embodiment the peers participating in an iterative DHT based overlay network maintain alternative contacts for each routing table entry. Some DHT algorithms, such as Kademlia, maintain multiple contacts for each routing table entry by default. As described above, the routing table entries in Kademlia are called *k*-buckets, and each *k-*bucket contains the contact information of up to *k* peers. When receiving a lookup request, a node returns information to the lookup initiator about the *k* nodes it knows about closest to the lookup target. This information is no longer a triple (as described above), but is a septuple *<Node-ID, IP address, port, SMPU, RMPU, AMPU, PMS>* for each *k* node. The lookup initiator uses this information to construct a list ordered on the basis of the cost (in terms of power consumption) of contacting each of the possible next hop nodes. The next round of iterative lookups is then done by selecting α nodes with the lowest cost, and sending iterative lookup requests to these nodes. Higher cost peers are only contacted if the lower cost peers fail to return responses with addresses of nodes that are closer to the lookup target.

Other DHT algorithms, such as Chord, do not maintain redundant routing table entries, but can easily be modified to do so. As already described, one way to achieve this is to maintain multiple finger pointers for each finger interval. Alternative finger pointers can be obtained, for instance, by asking each finger to return its successor pointers. The finger peer and its successors can then be used to construct a finger pointer set. The forwarding node can then choose the next hop node from among the nodes in the finger pointer set based on the power consumption information of the nodes.

In addition to the power usage parameters, a peer can also send information about its remaining battery capacity to its routing neighbours. As an example, a peer can inform its neighbours that if it remains in the active state (power consumption stays at AMPU) it will run out of battery capacity in 15 minutes. This information can be used to optimize the routing decision even further. More specifically, it can be used to prevent the situation that a low cost peer is woken up from sleep mode when it is close to running out of battery power. This can be implemented as a configurable limit so that a peer whose remaining battery time is less than a predefined amount will not be woken up from sleep mode unless absolutely necessary (such as when it is the lookup target). The remaining battery time can be communicated to other peers by including it as a new parameter in Connect and Status Update requests, and/or in periodic DHT maintenance messages such as keep-alive messages and routing table synchronization messages. This new parameter is here referred to as the Remaining Battery Time (RBT) parameter, and it contains the remaining battery time of the sender of the message in seconds. A non-battery powered peer may set the value of the RBT parameter to a special value such as '-1' to indicate to other peers that they do not need to take into account the remaining battery power of the peer in question.

However, in addition to wireless battery-powered peers, the power usage parameters may also be used by other types of peers in situations where those peers have different operating power consumption levels, for example non-battery powered peers having a wired network connection (e.g. a peer running on a personal computer).

Some overlay networks, such as hierarchical networks, operate DHTs using super peers. there are two types of nodes: super peers and clients. The difference between the two types of nodes is that super peers participate in the operation of the DHT (i.e. route messages and store resources in the overlay, and participate in DHT maintenance operations), whereas clients use the services of the overlay network through one or more super peers. A mobile peer with sufficient resources (such as bandwidth, public IP address, etc.) may be selected to serve as a super peer in a hierarchical P2P overlay network. In such cases the power usage parameters and PMS parameter of the super peers may be used so that a client that is connected to multiple super peers can operate the economic path finder mechanism of the present invention to select the lowest cost super peer, in terms of power consumption, from among the set of super peers to which the client is connected.

In the example referred to above of an overlay network in WCDMA, in order to use the economic path finder mechanism, an application running on a mobile terminal needs to have access to the radio resource control (RRC) state information. This information can be accessed by an application running on the native platform of the terminal, which application may be provided by the terminal vendor. On the other hand, trusted third-party applications may also access this information through a vendor-specific application programming interface (API) on the terminal, provided that the API is configured to access to such information. However, support from a vendor-provided API is not required if the information is accessed by a Java application running on the terminal. Such an application may be obtained by a terminal by way of a Java Specification Request (JSR).

However, there may be cases where a third party P2P application does not have access to a terminal's RRC state information, or where the terminal is configured not to provide its power consumption information to third parties (i.e. where the relevant API is private). In such cases it may be possible for the third party application to obtain the power usage parameters by reference to the model of the terminal. For example, this information may be available from a web server, or it may be included as data provided with the P2P application. The P2P application may be configured to determine the model of the terminal by reference to a system property. For example, system properties of terminals are made available to all Java Micro Edition (JME) based applications.

Nevertheless, the P2P application that does not have access to RRC state information is unable to determine the PMS status of the terminal, and so is unable to learn if the terminal is asleep or in an active or restricted mode. In that case, the P2P application sets the PMS parameter to 'unknown' in the peer protocol messages that it originates. Routing decisions where the PMS parameters include one or more 'unknown' parameters are processed as follows.
A) If the set of alternative next hop nodes contains at least one peer in active mode and one or more peers whose power management status is unknown (and possibly, further peers whose status is 'restricted' or 'sleep'), then the message is always routed to one of the active peers. This avoids any risk of increasing the power consumption of any peers whose status is unknown, but which happen to be in non-active modes.
B) If there are no active peers in the set of alternative next hop nodes, but there is one or more peers whose power management status is unknown (and possibly further peers whose status is 'restricted' or 'sleep'), then a peer is selected from the set of peers with unknown status and with the lowest AMPU value. The assumption in this case is that all the peers whose power management status is unknown are in the active state. This avoids routing messages to nodes with large active mode power consumption, while still avoiding routing to peers are known to be sleeping or in restricted mode.

An example of the power usage and PMS parameters for a set of alternative next hop nodes is given in Table 5 below. In this case, the message should be routed to peer F1 because (A) there are no active peers, and (B) of the two peers whose power management status is unknown, peer F1 has the lowest AMPU. Note that SMPU and RMPU values are irrelevant when the power management status of a peer is unknown.

**Table 5**

| **Peer** | **PMS** | **SMPU** | **RMPU** | **AMPU** |
|---|---|---|---|---|
| F1 | unknown | - | - | 250 |
| F2 | unknown | - | - | 1000 |
| F3 | sleep | 500 | 750 | 1500 |
| F4 | restricted | 10 | 125 | 1250 |

it will be appreciated by the person of skill in the art that various modifications may be made to the above described embodiments without departing from the scope of the present invention.

## Claims

1. A node for use within an overlay network and comprising a decision unit for making a routing decision based upon a knowledge of the power consumption levels of a set of routing neighbour nodes In the overlay network, the decision unit including:
a memory for storing a routing table containing, for each routing neighbour node, a mapping between an overlay network address of the node and a physical locator of the node and parameters in, or associated with, the routing table for each routing neighbour, the parameters having been received from a routing neighbour and including: power usage parameters indicating a level of power consumption for each of a plurality of operational states of the routing neighbour; and
a power management status, PMS, parameter indicating a current, or most recently notified, operational state of the routing neighbour, or indicating the next operational state that the routing neighbour is going to enter;
and
a processing unit configured to determine a routing neighbour to forward a message to, based on the power usage parameters and the PMS parameters of the routing neighbours.

2. A node according to claim 1, and being configured to receive a status update message from a routing neighbour indicating that the routing neighbour is about to change its operating state, the status update message including the routing neighbour's new PMS parameter for the operating state it is about to enter, the node storing the new PMS parameter in the routing table entry for the routing neighbour.

3. A node according to claim 2, and being configured to determine from the parameters of the routing neighbours in the routing table, if any of the routing neighbours are in a sleep mode, and to store the status update message In the overlay network for later delivery to a sleeping routing neighbour when it changes state out of the sleep mode to an active or restricted mode.

4. A node for use within an overlay network and being configured to provide power consumption levels for each of a plurality of operational states of the node to other nodes in the overlay network, and to notify one or more peer nodes in the network of an impending change in operational state of the node.

5. A node according to claim 4, and comprising a memory storing power usage parameters indicative of said power consumption levels, and
a processing unit configured to provide said power usage parameters in peer protocol messages sent to other nodes in the overlay network, and to provide a PMS parameter indicating an operational state that the node is about to enter in a notification sent to other nodes of the network.

6. A node according to claim 5, and being configured to send a status update message to one or more routing neighbours within said overlay network indicating that it is about to change its operating state, the status update message including the node's PMS parameter for the operating state it is about to enter.

7. A node according to any one of claims 4 to 6, further configured to provide information relating to its remaining battery capacity to other nodes of the network, optionally wherein the remaining battery capacity comprises an indication that if the node remains in an active state it will run out of battery capacity within a certain amount of time.

8. A node according to any one of the preceding claims and being configured to access a Radio Resource Control, RRC, state machine to determine operating state information, preferably wherein the node comprises an application running on a native platform of the node for accessing the RRC state machine, and more preferably wherein the application comprises a vendor-specific application programming interface, API, configured to access the RRC state machine, or a Java application obtained by way of a Java Specification Request, JSR, the Java application enabling access to the RRC state machine.

9. A node according to any one of claims 1 to 7, configured to obtain power usage parameters of a node by reference to a terminal model of the node, and from a web server, or from data provided with a P2P application residing at the node such as by determining the model of the terminal by reference to a system property.

10. A node according to any one of the preceding claims, wherein the node is unable to determine the operating state of another peer, the node being configured to set a PMS parameter to 'unknown' in peer protocol messages that it originates.

11. A node according to any one of the preceding claims, wherein the power consumption levels are specified in terms of power usage parameters that include one or more of:
a Sleep Mode Power Usage, SMPU, parameter specifying tho power consumption of the node when it is in a power saving, or sleep, mode;
an Active Mode Power Usage, AMPU, parameter specifying the power consumption of the node when it is operating in an active mode; and
a Restricted Mode Power Usage, RMPU, parameter specifying power consumption when the node is operating in a restricted mode,

12. A node according to any one of claims 1 to 3, 5, 6 and 10, wherein the PMS parameter indicates an operational state selected from: a power saving, or sleeping, state; an active state; a restricted state; and an unknown state.

13. A node according to any one of the preceding claims, the node being a mobile user terminal.

14. A method of making a routing decision at a routing node of an overlay network, wherein the overlay network employs a distributed hash table, DHT, and wherein the overlay network comprises nodes that maintain routing tables, a routing table containing, for each of a set of routing neighbour nodes in the overlay network, a mapping between an overlay network address of the node and a physical locator of the node, the method comprising:
maintaining parameters in, or associated with, the routing table for each routing neighbour, the parameters having been received from a routing neighbour and including:
power usage parameters indicating a level of power consumption for each of a plurality of operational states of the routing neighbour, and
a power management status, PMS, parameter indicating a current, or most recently notified, operational state of the routing neighbour, or indicating the next operational state that the routing neighbour is going to enter;
and
selecting one or more of a set of peer nodes in the overlay network to forward a message to based on the power usage parameters and the PMS parameters of the routing neighbours.

15. A method according to claim 14, wherein maintaining parameters comprises receiving a status update message from a routing neighbour, the status update message including a PMS parameter specifying the next operational state that the routing neighbour is going to enter, and updating the routing neighbour's PMS parameter in, or associated with, its routing table.

16. A method according to claim 14 or claim 15, further comprising checking the PMS status of the routing neighbours and either sending the status update message to a routing neighbour If it is not sleeping, or if it is sleeping by checking the PMS status of direct routing neighbours of the sleeping routing neighbour to identify a non-sleeping direct routing neighbour, and sending the status update message destined for the sleeping routing neighbour to the non-sleeping direct neighbour for storage.

17. A method according to claim 16, wherein the non-sleeping direct routing neighbour is about to enter a sleep mode, the method further comprising forwarding the status update message to another non-sleeping direct routing neighbour of the sleeping routing neighbour.

18. A method according to any one of claims 14 to 17, wherein selecting a routing neighbour to forward a message to comprises:
determining a set of alternative routing neighbours as next hop peer nodes for a message that is to be routed to a destination peer;
checking the operating state of the next hop peer nodes; and either
forwarding the message to a next hop peer node if no change of state will bo required when the message is sent to that node; or
checking the power consumption levels of the next hop peer nodes if there are no nodes that will not require a change of state, calculating the increase in power consumption involved in changing state of each of the next hop peers, and forwarding the message to the next hop peer requiring the smallest increase in power consumption.

19. A method according to claim 18, wherein the operating states of routing neighbours are specified In terms of PMS parameters that include one or more 'unknown' status parameters, the method comprising:
A) if the set of alternative next hop nodes contains at least one peer in an active mode forwarding the message to one of the peers in active mode; and
B) if the set of alternative next hop nodes contains no peers in the active mode, selecting a peer from among the peers with unknown status having the lowest power consumption In the active mode.

## Patentansprüche

1. Knoten zur Verwendung in einem Overlay-Netz und umfassend eine Entscheidungseinheit zum Treffen einer Routing-Entscheidung auf der Grundlage der Kenntnis der Leistungsaufnahmepegel einer Gruppe von Routing-Nachbarknoten in dem Overlay-Netz, wobei die Entscheidungseinheit einschließt:
einen Speicher zum Speichern einer Routing-Tabelle, die für jeden Routing-Nachbarknoten eine Zuordnung zwischen einer Overlay-Netzadresse des Knotens und einem physischen Lokalisierer des Knotens und Parameter in der oder im Zusammenhang mit der Routing-Tabelle für jeden Routing-Nachbarn enthält, wobei die Parameter von einem Routing-Nachbarn empfangen worden sind und einschließen
Stromverbrauchsparameter, die einen Leistungsaufnahmepegel für jeden aus einer Vielzahl von Betriebszuständen des Routing-Nachbarn angeben; und
einen Stromsparstatus- bzw. PMS-Parameter, der einen aktuellen oder zuletzt mitgeteilten Betriebszustand des Routing-Nachbarn angibt oder den nächsten Betriebszustand, in den der Routing-Nachbar gerade eintreten will, angibt; und
eine Verarbeitungseinheit, die dafür konfiguriert ist, einen Routing-Nachbarn, an den eine Nachricht weiterzugeben ist, auf der Grundlage der Stromverbrauchsparameter und der PMS-Parameter der Routing-Nachbarn zu bestimmen.

2. Knoten nach Anspruch 1 und dafür konfiguriert, eine Statusaktualisierungsnachricht von einem Routing-Nachbarn zu empfangen, die besagt, dass der Routing-Nachbar im Begriff ist, seinen Betriebszustand zu ändern, wobei die Statusaktualisierungsnachricht den neuen PMS-Parameter des Routing-Nachbarn für den Betriebszustand einschließt, in den er im Begriff ist einzutreten, wobei der Knoten den neuen PMS-Parameter in dem Routing-Tabelleneintrag für den Routing-Nachbarn speichert.

3. Knoten nach Anspruch 2 und dafür konfiguriert, aus den Parametern der Routing-Nachbarn in der Routing-Tabelle zu bestimmen, ob irgendwelche der Routing-Nachbarn in einem Schlafmodus sind, und die Statusaktualisierungsnachricht im Overlay-Netz für eine spätere Übergabe an einen schlafenden Routing-Nachbarn zu speichern, wenn er den Zustand vom Schlafmodus in einen aktiven oder eingeschränkten Modus ändert.

4. Knoten zur Verwendung in einem Overlay-Netz und dafür konfiguriert, Leistungsaufnahmepegel für jeden aus einer Vielzahl von Betriebszuständen des Knotens für andere Knoten im Overlay-Netz bereitzustellen und einen oder mehrere Partner-Knoten im Netz über eine bevorstehende Änderung des Betriebszustands des Knotens zu benachrichtigen.

5. Knoten nach Anspruch 4 und umfassend einen Speicher, der Stromverbrauchsparameter speichert, die Angaben über die Leistungsaufnahmepegel machen, und
eine Verarbeitungseinheit, die dafür konfiguriert ist, die Stromverbrauchsparameter in an andere Knoten im Overlay-Netz gesendete Partner-Protokollnachrichten bereitzustellen und einen PMS-Parameter bereitzustellen, der einen Betriebszustand, in den der Knoten im Begriff ist einzutreten, in einer an andere Knoten des Netzes gesendeten Benachrichtigung angibt.

6. Knoten nach Anspruch 5 und dafür konfiguriert, eine Statusaktualisierungsnachricht an einen oder mehrere Routing-Nachbarn im Overlay-Netz zu senden, die besagt, dass er im Begriff ist, seinen Betriebszustand zu ändern, wobei die Statusaktualisierungsnachricht den PMS-Parameter des Knotens für den Betriebszustand enthält, in den er im Begriff ist einzutreten.

7. Knoten nach einem der Ansprüche 4 bis 6, der ferner dafür konfiguriert ist, Information bezüglich seiner verbleibenden Batteriekapazität für andere Knoten des Netzes bereitzustellen, wobei wahlweise die verbleibende Batteriekapazität einen Hinweis umfasst, dass, wenn der Knoten in einem aktiven Zustand verbleibt, seine Batteriekapazität innerhalb eines gewissen Zeitraums zu Ende geht.

8. Knoten nach einem der vorangehenden Ansprüche und dafür konfiguriert, auf eine Funkressourcensteuerungs- bzw. RRC-Zustandsmaschine zuzugreifen, um Betriebszustandsinformation zu bestimmen, wobei vorzugsweise der Knoten eine Anwendung umfasst, die auf einer eigenen Plattform des Knotens läuft, um auf die RRC-Zustandsmaschine zuzugreifen, und wobei besonders bevorzugt die Anwendung eine herstellerspezifische Anwendungsprogrammierschnittstelle, API, umfasst, die dafür konfiguriert ist, auf die RRC-Zustandsmaschine zuzugreifen, oder eine Java-Anwendung umfasst, die über eine Java-Spezifikationsanforderung, JSR, bezogen wird, wobei die Java-Anwendung den Zugriff auf die RRC-Zustandsmaschine freigibt.

9. Knoten nach einem der Ansprüche 1 bis 7, der dafür konfiguriert ist, Stromverbrauchsparameter eines Knotens zu gewinnen unter Bezugnahme auf ein Endgerätemodell des Knotens und von einem Web-Server oder von Daten, die mit einer Peer-to-Peer-Anwendung versehen sind, die sich im Knoten befindet, wie etwa durch Bestimmen des Modells des Endgeräts unter Bezugnahme auf eine Systemeigenschaft.

10. Knoten nach einem der vorhergehenden Ansprüche, wobei der Knoten den Betriebszustand eines anderen Partners nicht bestimmen kann, wobei der Knoten dafür konfiguriert ist, einen PMS-Parameter in Partner-Protokollnachrichten, die er ausgibt, auf "unbekannt" zu setzen.

11. Knoten nach einem der vorhergehenden Ansprüche, wobei die Leistungsaufnahmepegel als Stromverbrauchsparameter beschrieben sind, die eines oder mehrere von Folgendem einschließen:
einen Schlafmodusstromverbrauchs- bzw. SMPU-Parameter, der die Leistungsaufnahme des Knotens, wenn er im Stromspar- oder Schlafmodus ist, beschreibt;
einen Aktivmodusstromverbrauchs- bzw. AMPU-Parameter, der die Leistungsaufnahme des Knotens, wenn er in einem aktiven Modus arbeitet, beschreibt;
und
einen Einschränkungsmodusstromverbrauchs- bzw. RMPU-Parameter, der die Leistungsaufnahme beschreibt, wenn der Knoten in einem eingeschränkten Modus arbeitet.

12. Knoten nach einem der Ansprüche 1 bis 3, 5, 6 und 10, wobei der PMS-Parameter einen Betriebszustand angibt, der ausgewählt aus: einem Stromspar- oder Schlafzustand; einem aktiven Zustand; einem eingeschränkten Zustand; und einem Unbekannt-Zustand.

13. Knoten nach einem der vorhergehenden Ansprüche, wobei der Knoten ein mobiles Benutzerendgerät ist.

14. Verfahren zum Treffen einer Routing-Entscheidung in einen Routing-Knoten eines Overlay-Netzes, wobei das Overlay-Netz eine verteilte Hash-Tabelle, DHT, verwendet und wobei das Overlay-Netz Knoten umfasst, die Routing-Tabellen unterhalten, wobei eine Routing-Tabelle für jeden aus einer Gruppe von Routing-Nachbarknoten im Overlay-Netz eine Zuordnung zwischen einer Overlay-Netzadresse des Knotens und einem physischen Lokalisator des Knotens enthält, wobei das Verfahren umfasst:
Unterhalten von Parametern in oder im Zusammenhang mit der Routing-Tabelle für jeden Routing-Nachbarn, wobei die Parameter von einem Routing-Nachbarn empfangen worden sind und einschließen:
Stromverbrauchsparameter, die einen Leistungsaufnahmepegel für jeden aus einer Vielzahl von Betriebszuständen des Routing-Nachbarn angeben; und
einen Stromverwaltungsstatus- bzw. PMS-Parameter, der einen aktuellen oder zuletzt mitgeteilten Betriebszustand des Routing-Nachbarn angibt oder den nächsten Betriebszustand, in den der Routing-Nachbar gerade eintreten will, angibt; und
Auswählen eines oder mehrerer aus einer Gruppe von Partner-Knoten im Overlay-Netz, an die eine Nachricht weiterzugeben ist, auf der Grundlage der Stromverbrauchsparameter und PMS-Parameter der Routing-Nachbarn.

15. Verfahren nach Anspruch 14, wobei die Unterhaltung der Parameter umfasst:
Empfangen einer Statusaktualisierungsnachricht von einem Routing-Nachbarn, wobei die Statusaktualisierungsnachricht einen PMS-Parameter einschließt, der den nächsten Betriebszustand, in den der Routing-Nachbar gerade eintreten will, beschreibt, und
Aktualisieren des PMS-Parameters des Routing-Nachbarn in oder im Zusammenhang mit seiner Routing-Tabelle.

16. Verfahren nach Anspruch 14 oder 15, ferner umfassend: Überprüfen des PMS-Status der Routing-Nachbarn und entweder Senden der Statusaktualisierungsnachricht an einen Routing-Nachbarn, wenn er nicht schläft, oder wenn er schläft, Überprüfen des PMS-Status von direkten Routing-Nachbarn des schlafenden Routing-Nachbarn, um einen nicht schlafenden direkten Routing-Nachbarn zu identifizieren, und Senden der Statusaktualisierungsnachricht, die für den schlafenden Routing-Nachbarn bestimmt ist, an den nicht schlafenden direkten Nachbarn zur Speicherung.

17. Verfahren nach Anspruch 16, wobei der nicht schlafende direkte Routing-Nachbar im Begriff ist, in einen Schlafmodus einzutreten, wobei das Verfahren ferner umfasst:
Weitergeben der Statusaktualisierungsnachricht an einen anderen nicht schlafenden direkten Routing-Nachbarn des schlafenden Routing-Nachbarn.

18. Verfahren nach einem der Ansprüche 14 bis 17, wobei das Auswählen eines Routing-Nachbarn, an den eine Nachricht weiterzuleiten ist, umfasst:
Bestimmen einer Gruppe von alternativen Routing-Nachbarn als Partner-Knoten der nächsten Teilstrecke für eine Nachricht, die an einen Zielpartner weiterzuleiten ist;
Überprüfen des Betriebszustands der Partner-Knoten der nächsten Teilstrecke; und entweder
Weitergeben der Nachricht an einen Partner-Knoten der nächsten Teilstrecke, wenn keine Zustandsänderung erforderlich ist, wenn die Nachricht an diesen Knoten gesendet wird; oder
Überprüfen der Leistungsaufnahmepegel der Partner-Knoten der nächsten Teilstrecke, wenn keine Knoten vorhanden sind, die keine Zustandsänderung erfordern, Berechnen der Erhöhung der Leistungsaufnahme, die bei der Änderung des Zustands jeder der Partner der nächsten Teilstrecke eintritt, und Weitergeben der Nachricht an den Partner der nächsten Teilstrecke, der die geringste Erhöhung der Leistungsaufnahme erfordert.

19. Verfahren nach Anspruch 18, wobei die Betriebszustände der Routing-Nachbarn als PMS-Parameter beschrieben werden, die einen oder mehrere "Unbekannt"-Zustandsparameter einschließen, wobei das Verfahren umfasst:
A) wenn die Gruppe von alternativen Knoten der nächsten Teilstrecke mindestens einen Partner im aktiven Modus enthält, Weitergeben der Nachricht an einen der Partner im aktiven Modus; und
B) wenn die Gruppe von alternativen Knoten der nächsten Teilstrecke keinen Partner im aktiven Modus enthält, Auswählen eines Partners unter den Partnern mit Unbekannt-Status, der die niedrigste Leistungsaufnahme im aktiven Modus hat.

## Revendications

1. Noeud destiné à être utilisé dans un réseau superposé et comprenant une unité décisionnelle destiné à prendre une décision de routage sur la base de la connaissance des niveaux de consommation d'énergie d'un ensemble de noeuds voisins de routage dans le réseau superposé, l'unité décisionnelle incluant :
une mémoire destinée à stocker une table de routage contenant, pour chaque noeud voisin de routage, une mise en correspondance entre une adresse de réseau superposé du noeud et un localisateur physique du noeud, et des paramètres dans, ou associés à, la table de routage pour chaque voisin de routage, les paramètres ayant été reçus à partir d'un voisin de routage et incluant :
des paramètres d'utilisation d'énergie indiquant un niveau de consommation d'énergie pour chaque état d'une pluralité d'états opérationnels du voisin de routage ; et
un paramètre d'état de gestion d'énergie, PMS, indiquant un état opérationnel en cours, ou le plus récemment notifié, du voisin de routage, ou indiquant le prochain état opérationnel dans lequel le voisin de routage s'apprête à entrer ; et
une unité de traitement configurée de manière à déterminer un voisin de routage auquel il faut transmettre un message, sur la base des paramètres d'utilisation d'énergie et des paramètres d'état PMS des voisins de routage.

2. Noeud selon la revendication 1, lequel est configuré de manière à recevoir un message de mise à jour d'état, en provenance d'un voisin de routage, indiquant que le voisin de routage est sur le point de modifier son état d'exploitation, le message de mise à jour d'état incluant le nouveau paramètre d'état PMS du voisin de routage pour l'état d'exploitation dans lequel il est sur le point d'entrer, le noeud stockant le nouveau paramètre d'état PMS dans l'entrée de table de routage pour le voisin de routage.

3. Noeud selon la revendication 2, lequel est configuré de manière à déterminer, à partir des paramètres des voisins de routage dans la table de routage, si des voisins de routage quelconques sont dans un mode de veille, et à stocker le message de mise à jour d'état dans le réseau superposé en vue d'une remise ultérieure à un voisin de routage en veille lorsqu'il change d'état, du mode de veille à un mode actif ou à un mode limité.

4. Noeud destiné à être utilisé dans un réseau superposé et étant configuré de manière à fournir des niveaux de consommation d'énergie pour chaque état d'une pluralité d'états opérationnels du noeud à d'autres noeuds dans le réseau superposé, et à signaler, à un ou plusieurs noeuds pairs dans le réseau, un changement imminent de l'état opérationnel du noeud.

5. Noeud selon la revendication 4, comprenant une mémoire stockant des paramètres d'utilisation d'énergie indicatifs desdits niveaux de consommation d'énergie ; et
une unité de traitement configurée de manière à fournir lesdits paramètres d'utilisation d'énergie dans des messages de protocole de pairs envoyés à d'autres noeuds dans le réseau superposé, et à fournir un paramètre d'état PMS indiquant un état opérationnel dans lequel le noeud est sur le point d'entrer, dans une notification envoyée à d'autres noeuds du réseau.

6. Noeud selon la revendication 5, lequel est configuré de manière à envoyer un message de mise à jour d'état à un ou plusieurs voisins de routage au sein dudit réseau superposé, indiquant qu'il est sur le point de modifier son état d'exploitation, le message de mise à jour d'état incluant le paramètre d'état PMS du noeud pour l'état d'exploitation dans lequel il est sur le point d'entrer.

7. Noeud selon l'une quelconque des revendications 4 à 6, configuré en outre de manière à fournir des informations relatives à sa capacité de batterie restante à d'autres noeuds du réseau, optionnellement dans lequel la capacité de batterie restante comprend une indication selon laquelle, si le noeud demeure dans un état actif, il manquera de capacité de batterie dans un certain laps de temps.

8. Noeud selon l'une quelconque des revendications précédentes, lequel est configuré de manière à accéder à une machine à états de commande de ressource radio, RRC, en vue de déterminer des informations d'état d'exploitation, préférablement dans lequel le noeud comprend une application s'exécutant sur une plateforme native du noeud destiné à accéder à la machine à états de commande RRC, et plus préférablement dans lequel l'application comprend une interface de programmation d'application spécifique au fournisseur, API, configurée de manière à accéder à la machine à états de commande RRC, ou une application Java obtenue par l'intermédiaire d'une demande de spécification Java, JSR, l'application Java permettant l'accès à la machine à états de commande RRC.

9. Noeud selon l'une quelconque des revendications 1 à 7, configuré de manière à obtenir des paramètres d'utilisation d'énergie d'un noeud en référence à un modèle de terminal du noeud, et à partir d'un serveur Web, ou à partir de données fournies par une application pair-à-pair, P2P, résidant au niveau du noeud, par exemple en déterminant le modèle du terminal en référence à une propriété système.

10. Noeud selon l'une quelconque des revendications précédentes, dans lequel le noeud n'est pas en mesure de déterminer l'état d'exploitation d'un autre pair, le noeud étant configuré de manière à définir un paramètre d'état PMS sur l'état « inconnu » dans des messages de protocole de pairs dont il est à l'origine.

11. Noeud selon l'une quelconque des revendications précédentes, dans lequel les niveaux de consommation d'énergie sont spécifiés en termes de paramètres d'utilisation d'énergie qui incluent un ou plusieurs éléments parmi :
un paramètre d'utilisation d'énergie en mode de veille, SMPU, spécifiant la consommation d'énergie du noeud lorsqu'il est en mode d'économie d'énergie, ou de veille ;
un paramètre d'utilisation d'énergie en mode actif, AMPU, spécifiant la consommation d'énergie du noeud lorsqu'il opère en mode actif ; et
un paramètre d'utilisation d'énergie en mode limité, RMPU, spécifiant la consommation d'énergie lorsque le noeud opère en mode limité.

12. Noeud selon l'une quelconque des revendications 1 à 3, 5, 6 et 10, dans lequel le paramètre d'état PMS indique un état opérationnel sélectionné parmi : un état d'économie d'énergie, ou état de veille ; un état actif ; un état limité, et un état inconnu.

13. Noeud selon l'une quelconque des revendications précédentes, dans lequel le noeud est un terminal d'utilisateur mobile.

14. Procédé de prise de décision de routage au niveau d'un noeud de routage d'un réseau superposé, dans lequel le réseau superposé emploie une table de hachage distribuée, DHT, et dans lequel le réseau superposé comprend des noeuds qui maintiennent des tables de routage, une table de routage contenant, pour chacun d'un ensemble de noeuds voisins de routage dans le réseau superposé, une mise en correspondance entre une adresse de réseau superposé du noeud et un localisateur physique du noeud, le procédé consistant à :
maintenir des paramètres dans, ou associés à, la table de routage pour chaque voisin de routage, les paramètres ayant été reçus par un voisin de routage et incluant :
des paramètres d'utilisation d'énergie indiquant un niveau de consommation d'énergie pour chaque état d'une pluralité d'états opérationnels du voisin de routage ; et
un paramètre d'état de gestion d'énergie, PMS, indiquant un état opérationnel en cours, ou le plus récemment notifié, du voisin de routage, ou indiquant le prochain état opérationnel dans lequel le voisin de routage est sur le point d'entrer ; et
sélectionner un ou plusieurs noeuds d'un ensemble de noeuds pairs dans le réseau superposé auquel/auxquels il faut transmettre un message, sur la base des paramètres d'utilisation d'énergie et des paramètres d'état PMS des voisins de routage.

15. Procédé selon la revendication 14, dans lequel le maintien des paramètres consiste à recevoir un message de mise à jour d'état en provenance d'un voisin de routage, le message de mise à jour d'état incluant un paramètre d'état PMS spécifiant le prochain état opérationnel dans lequel le voisin de routage est sur le point d'entrer, et à mettre à jour le paramètre d'état PMS du voisin de routage dans, ou associé à, sa table de routage.

16. Procédé selon la revendication 14 ou 15, consistant en outre à vérifier l'état PMS des voisins de routage, et soit à envoyer le message de mise à jour d'état à un voisin de routage s'il n'est pas en veille, ou s'il est en veille, à vérifier l'état PMS de voisins de routage directs du voisin de routage en veille en vue d'identifier un voisin de routage direct non dormant, et à envoyer le message de mise à jour d'état, destiné au voisin de routage en veille, au voisin direct non dormant, en vue de son stockage.

17. Procédé selon la revendication 16, dans lequel le voisin de routage direct non dormant est sur le point d'entrer en mode de veille, le procédé consistant en outre à transmettre le message de mise à jour d'état à un autre voisin de routage direct non dormant du voisin de routage en veille.

18. Procédé selon l'une quelconque des revendications 14 à 17, dans lequel la sélection d'un voisin de routage auquel il faut transmettre un message consiste à :
déterminer un ensemble de voisins de routage alternatifs en qualité de noeuds pairs de saut successif pour un message qui doit être acheminé vers un pair de destination ;
vérifier l'état d'exploitation des noeuds pairs de saut successif ; et soit
transmettre le message à un noeud pair de saut successif si aucun changement d'état n'est requis lorsque le message est envoyé à ce noeud ; soit
vérifier les niveaux de consommation d'énergie des noeuds pairs de saut successif en l'absence de noeuds qui ne nécessiteront pas de changement d'état, calculer l'augmentation de consommation d'énergie impliquée dans le changement d'état de chacun des pairs de saut successif, et transmettre le message au pair de saut successif nécessitant la plus faible augmentation de consommation d'énergie.

19. Procédé selon la revendication 18, dans lequel les états d'exploitation des voisins de routage sont spécifiés en termes de paramètres d'état PMS qui incluent un ou plusieurs paramètres d'état « inconnu », le procédé consistant à :
A) si l'ensemble de noeuds de saut successif alternatifs contient au moins un pair en mode actif, transmettre le message à l'un des pairs en mode actif ; et
B) si l'ensemble de noeuds de saut successif alternatifs ne contient pas de pairs en mode actif, sélectionner un pair parmi les pairs à l'état inconnu présentant la consommation d'énergie la plus faible en mode actif.
